# EUROPEAN PATENT SPECIFICATION

(11) **EP 4 705 629 B1**
(45) Date of publication and mention of the grant of the patent: **09.12.2026**
(21) Application number: 24729821.9
(22) Date of filing: 28.05.2024
(51) Int. Cl.: F03D 1/06

(54) **CONNECTOR ASSEMBLY**
VERBINDERANORDNUNG
ENSEMBLE CONNECTEUR

(30) Priority: 16.06.2023 EP 23179796
(43) Date of publication of application: 11.03.2026
(73) Proprietor: Siemens Gamesa Renewable Energy A/S, 7330 Brande (DK)
(72) Inventor: EYB, Enno, 24116 Kiel (DE)
(74) Representative: SGRE-Association
(86) International application number: PCT/EP2024/064563
(87) International publication number: WO 2024/256159

(56) References cited:
- EP-A1- 2 930 350
- EP-A1- 3 581 790
- EP-A1- 4 155 530
- WO-A1-2022/022788

## Description

### Background

The rotor blades of a wind turbine can have a length of 80 m or more. Transport of such long rotor blades by road or rail may not always be possible on account of infrastructure limitations. Therefore, in order to install a wind turbine with such long rotor blades, each rotor blade can be provided as two or more segments which can be assembled on site.

There are various ways of manufacturing rotor blade segments so that these can be connected to form a robust joint. In one approach, the joint is formed by an arrangement of parallel bolts screwed into threaded inserts that were previously embedded in the outer ends of the rotor blade segments. In order to provide the required strength for such a connection, the bolts are generally pre-tensioned. In a "long" rotor blade as described above, the width of the airfoil at the joint between rotor blade segments can be in the order of 2 - 3 m. To ensure the structural strength of such a wide joint, it is desirable to use a dense arrangement of bolts on each side of the chord plane, with the bolts arranged primarily in the thicker part of the airfoil.

In one approach, a connector assembly can comprise a pair of collinear double-ended stud bolts. Each stud bolt extends through an opening in the end of an intermediate part, with one end of the bolt screwed into an embedded insert in the rotor blade segment, and the other end is secured with a nut. The required load-bearing properties of the connector assembly generally determines the minimum diameter of each bolt as well as its minimum length. A problem with such a connector assembly is the bulk of the intermediate part, which must usually be dimensioned to accommodate the head of a wrench so that the nuts can be tightened. Therefore, the number of bolted connections in the joint between rotor blade segments is limited by the width of the intermediate part of the connector assembly, and the distance between stud bolts of adjacent prior art connector assemblies can be unfavourably large.

Documents considered during the patent prosecution are i.a.: EP 3 581 790 A1, WO 2022/022788 A1, EP 4 155 530 A1 and EP 2 930 350 A1.

It is therefore an object of the invention to provide an improved connector assembly which overcomes the problems outlined above.

This object is achieved by the claimed connector assembly, the claimed method of connecting wind turbine rotor blade segments, and the claimed wind turbine rotor blade.

### Description

According to the invention, the connector assembly is used to connect two parts of an object, and comprises a single stud bolt which has a shank and a threaded portion at each end of the shank; a first threaded insert for embedding in one of the parts, adapted to engage with a first threaded portion of the stud bolt; and a second threaded insert for embedding in the other part, adapted to engage with the second threaded portion of the stud bolt. The inventive connector assembly also comprises a spacer dimensioned to accommodate the shank of the stud bolt, and a length adjustment means for adjusting the length of the spacer between an initial length and a maximum extended length to apply pre-tension to the stud bolt. The threaded inserts, the spacer and the stud bolt are separate parts.

It shall be understood that, when the object parts are connected by this type of double-ended stud bolt, a gap necessarily remains between the object parts. This gap may be referred to as the "intended gap" in the following. The spacer, which is in place on the stud bolt shank, shall be understood to extend across this intended gap between the object parts. The spacer shall be understood to have an essentially hollow and tubular form to accommodate the stud bolt shank, i.e. the spacer is open at both ends. When the spacer is extended to its maximum extended length, its end faces will press against the opposing end faces of the rotor blade in an attempt to widen the gap, which is not possible (the rotor blade segments cannot be pushed apart on account of the stud bolt and threaded inserts). As a result, a pre-tension force is established in each stud bolt, achieving a strong connection between the rotor blade segments. In the following, the terms "spacer", "pre-tensioning part" and "bolt pre-loader" have the same meaning and may be used interchangeably.

An advantage of the inventive connector assembly is that its widest dimension can be favourably compact, i.e. the connector assembly can be favourably narrow. This allows a greater density of bolts to be deployed in the joint between the two parts.

According to the invention, the wind turbine rotor blade comprises a first rotor blade segment and a second rotor blade segment, and a plurality of the inventive connector assemblies arranged to connect the first rotor blade segment to the second rotor blade segment. The load-bearing properties of the inventive wind turbine rotor blade can be improved over an equivalent prior art segmented rotor blade by the higher possible density of stud bolts forming the bolted joint between segments. Furthermore, since the spacers of the connector assemblies are relatively slender, the combined weight of the connector assemblies is less than the combined weight of the same number of equivalent prior art connector assemblies.

According to the invention, the method of connecting a first wind turbine rotor blade segment to a second wind turbine rotor blade segment with a plurality of such connector assemblies comprises an initial step of embedding the first and second threaded inserts of each connector assembly collinearly in the end faces of the rotor blade segments (i.e. each second insert is in line with a first insert such that the longitudinal axes of each insert pair are essentially collinear). Subsequently, the first end of each stud bolt is screwed into a first threaded insert, and a length-adjustable spacer is then placed over the shank of each stud bolt. In a next step, the second end of each stud bolt is screwed into the corresponding second threaded insert. At the completion of these steps, the rotor blade segments are joined by the stud bolts. In a final step, each spacer length is extended to fill the gap between the end faces of the rotor blade segments and to apply pre-tension as required to the corresponding stud bolt. Assembly of the rotor blade can then be completed by placing a fairing about the intended gap between rotor blade segments to form an essentially closed surface.

Particularly advantageous embodiments and features of the invention are given by the dependent claims, as revealed in the following description. The scope of protection being defined by the appended claims.

A threaded insert can be a cylindrical tube shaped to fit into a bore formed in a transition piece, and long enough to accommodate one end of a stud bolt. Alternatively, a threaded insert can be in the form of a T-bolt connector. Without restricting the invention in any way, the following refers mainly to a cylindrical tube realisation.

The inventive connector assembly can be used to connect any parts that benefit from this type of stud bolt connection. In the following, without restricting the invention in any way, it may be assumed that the object being assembled is a wind turbine rotor blade, and that each part is a rotor blade segment.

The expressions "threaded insert" and "insert" shall be understood to be synonyms and may be used interchangeably herein. The joint end of each rotor blade segment can be prepared in a well-established manner by embedding a tapered transition part as an extension of a spar cap in layers of composite material during the layup and curing stages of manufacture. To receive the threaded inserts, suitably deep bores can be formed in the end faces of the transition pieces.

In the following, it may be assumed that a wind turbine rotor blade is segmented to overcome transport difficulties as explained above. This is generally the case for wind turbine rotor blade lengths of 80 m or more. With a rotor blade of this size, the spanwise length of the joint between rotor blade segments, i.e. the total length of a connector assembly (measured between the outer ends of the two inserts), can be in the order of 1 m.

In a preferred embodiment of the invention, the joint between two rotor blade segments comprises 5 - 8 instances of the inventive connector assemblies arranged between a pair of transition parts on each side of the rotor blade.

Compared to the prior art connector assemblies, the inventive connector assemblies can be arranged closer together. This means that, for a rotor blade joint comprising the same number of connector assemblies, the transition parts can be made significantly narrower, requiring less material.

Alternatively, taking advantage of the tighter spacing between the inventive connector assemblies, the transition parts can remain "wide", and a larger number of connector assemblies may be used instead. This approach may be preferable, since it does not require redesign of the transition piece, and since it increases the strength of the connection, thereby allowing the joint between rotor blade segments to be moved further inboard (towards the root). For structural loading reasons, a segmented rotor blade with a longer tip segment and a shorter root segment may be preferable.

The stud bolt can be a full-bodied stud bolt, i.e. its shank diameter is the same as the major diameter of the thread. The stud bolt can have a length in the order of 350 mm, and the thread at each end can extend over a length of 100 mm or more. The threaded portion of an insert can be located a distance away from the end of the insert. Adjacent to the threaded portion, the insert can be shaped as a plain cylinder with a diameter at least as large as the major diameter of the bolt thread (to accommodate the bolt in the first assembly step). In an exemplary embodiment, the stud bolt has a diameter of 36 mm, for example a standard M36 bolt. The threaded ends of the stud bolt have the same handedness.

As explained above, a transition piece is prepared by forming bores in the laminated body of the transition piece to accommodate the required number of threaded inserts. Preferably, each bore is formed to a depth sufficient to accommodate a threaded insert, and each threaded insert is long enough to completely contain its end of the stud bolt. During the assembly stage, a stud bolt is threaded into a first threaded insert, and - after placing the spacer - the stud bolt is then turned in the opposite direction in order to screw its other end into the second threaded insert, thereby moving its first threaded end some distance "backwards" in the first insert. At completion of this stage, both threaded ends of the stud bolt engage with the threaded inserts.

To facilitate turning of the stud bolt of a connector assembly, its shank can have a surface feature shaped to engage with a means for turning the stud bolt. In a preferred embodiment of the invention, the shank of a stud bolt comprises a surface feature over some of its length, arranged to engage with a corresponding feature on the inside of the spacer. These can be any suitable polygonal shapes, for example complementary triangular, square or hexagonal shapes. Since the spacer is in place over the shank while the stud bolt is being turned to engage with the second threaded insert, preferably the spacer comprises an exterior surface feature to engage with a turning tool, for example the spacer can include a hexagonal portion to engage with a tool such as an open-ended wrench or spanner.

The length of the spacer of the inventive connector assembly can be extended from an initial minimum length to a maximum length. To this end, the spacer has a length adjustment means. This can be realized in any suitable manner. For example, in a particularly preferred embodiment of the invention, the spacer can be a two-part component with a means of moving one part in an axial direction relative to the other part. In one embodiment, the length adjustment means can be realised as a ratchet arrangement with a toothed linear rack formed on one spacer part, and a spring-loaded pawl on the other spacer part to engage with teeth of the rack when the first and second spacer parts are pushed apart to extend the spacer length.

In a more economical and therefore preferred embodiment of the invention, the spacer is assembled from two or more simple tubular sections. Two adjacent tubular sections are preferably joined by a threaded interface so that one section can be screwed onto the other. It the following, it shall be assumed that one end of a first tubular section has an outer thread, and one end of the second tubular section has a corresponding inner thread. With the second tubular section completely screwed onto the first tubular section, the spacer has its initial (smallest) length. To lengthen the spacer, the second tubular section is partially "unscrewed" from the first tubular section. In this embodiment, the threaded interface is also the length adjustment means. Preferably, the lead of the threaded interface is chosen to facilitate the desired length extension. In an exemplary embodiment, the lead is chosen to extend the spacer or "pre-tension bushing" by a distance equivalent to the thread pitch of the stud bolt per revolution (e.g. 4 mm in the case of an M36 stud bolt). The tubular sections move apart by this amount for each full turn of one tubular section relative to the other.

Instead of a threaded interface with multiple helical grooves with inclined side faces, the two spacer parts can meet at a single helical feature, allowing a relatively small length extension. Turning one spacer part by no more than one complete turn ensures that the complementary faces of both spacer parts remain in partial contact.

The airfoil of a wind turbine rotor blade can be subject to great loads during operation, and it follows that the joint between segments of a segmented rotor blade must withstand such loads. Each connector extending between rotor blade segments contributes to the strength of the connection, and it is generally preferable to use a dense arrangement of connectors, i.e. an arrangement in which the stud bolt pitch (the distance between midpoints of adjacent stud bolts) is favourably low. As explained above, the prior art connector assemblies are relatively bulky, and the number of connectors is limited by the width of each connector assembly. The stud bolt pitch in a prior art connector assembly can therefore be unfavourably large, for example in the order of 75 mm. This problem is overcome by the inventive connector assembly, which allows a favourably low stud bolt pitch. For example, the diameter of a stud bolt (defining the minimum inner diameter of the spacer) can be 36 mm, and the outer diameter of the spacer can be at most 55 mm. With a clearance of 10 mm between spacers to allow placement of a turning tool, the stud bolt pitch is only 65 mm.

To facilitate the length extension procedure, a spacer of the inventive connector assembly preferably comprises a number of surface features for engaging with a tool to adjust the spacer length. In a particularly preferred embodiment of the invention, a surface feature is a hexagonal cross-sectional shape along at least a portion of the spacer, shaped to engage with a tool such as an open-ended spanner or wrench. This surface feature of the spacer can be arranged at any suitable position along the spacer, for example towards the centre of a tubular section of the spacer. Alternatively or in addition, such a surface feature can be realized in the form of a sprocket-wheel with gear teeth extending radially outward from the spacer. After preparing the connector assemblies, a matching chain can be arranged about a sprocket wheel and also about another motor-driven chainwheel. In the manner of a bicycle drivetrain, the chainwheel causes the chain to turn the sprocket-wheel, thereby turning that spacer part.

Both parts of the spacer could be provided with appropriate surface features. For example, one spacer part may be formed to have opposing flat outer surface regions, allowing that spacer part to be held stationary by a suitable tool; the other spacer part may be formed to have a surface feature as described above, allowing that spacer part to be turned using an open-ended hex wrench, a chain, etc.

Any such surface features are preferably arranged so that the surface features of one spacer do not interfere with the surface features of its neighbouring spacer(s) during a tightening procedure, as will be explained below.

As indicated above, it is generally desirable to deploy the stud bolts in a dense arrangement, i.e. neighbouring stud bolts are preferably close together, but this placement is constrained by the width of the connector assemblies and any required clearance for assembly and tightening. However, the structural strength of the joint made with an arrangement of the inventive connector assemblies is already favourably high on account of the one-piece stud bolts, compared to a prior art connector assembly design based on two separate collinear studs. Furthermore, the spacer of the inventive connector assembly is effectively a closed cylinder and is therefore structurally very efficient (as regards its area moment of inertia) and therefore requires less material than a conventional open or "bathtub" spacer. The inventive design facilitates a narrower spacer a favourably close placement of neighbouring connector assemblies and a correspondingly dense arrangement of stud bolts.

In a further preferred embodiment of the invention, a dense placement of connector assemblies is facilitated by incorporating structural asymmetry in design of the spacer, and placing the connector assemblies in an alternating or "head-to-toe" arrangement. For example, in a preferred embodiment of the invention, a surface feature for engaging with a turning tool is offset from the centre of the spacer. When all spacers are in place between the rotor blade segments, these surface features lie in a staggered or "head-to-toe" arrangement. Equally, the tubular sections of a threaded-joint spacer can have unequal lengths, i.e. the threaded joint between the sections of a two-part spacer can be offset from the centre of the spacer. The longer spacer section can be formed to include the surface feature for engaging with the turning tool.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a joint between wind turbine rotor blade segments;
Figures 2 shows components of an exemplary embodiment of the inventive connector assembly;
Figures 3 and 4 illustrate stages of the inventive method;
Figures 5 to 7 show alternative embodiments of the inventive connector assembly;
Figure 8 shows a prior art connection between wind turbine rotor blade segments.

In the diagrams, like numbers refer to like objects throughout. Objects in the diagrams are not necessarily drawn to scale.

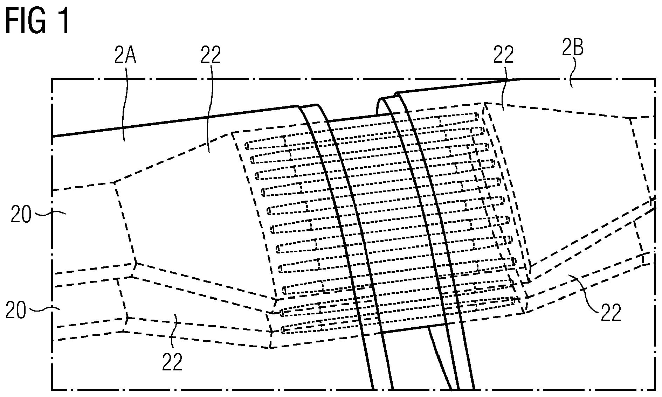

Figure 1 shows an exemplary joint between two segments 2A, 2B of a wind turbine rotor blade. The joint end of each segment 2A, 2B is prepared by forming a tapered transition part 22 as an extension of a spar cap 20, and embedding these in layers of composite material during the layup and curing stages of manufacture. In each flared part 22, a series of parallel bores or blind holes are formed to a desired depth, and a threaded insert is placed at a suitable position in each bore 24.

The rotor blade segments 2A, 2B will be connected by multiple instances of the inventive connector assembly 1, for example with 5 - 8 connector assemblies 1 over the suction side of the joint, and a similar number of connector assemblies 1 over the pressure side of the joint.

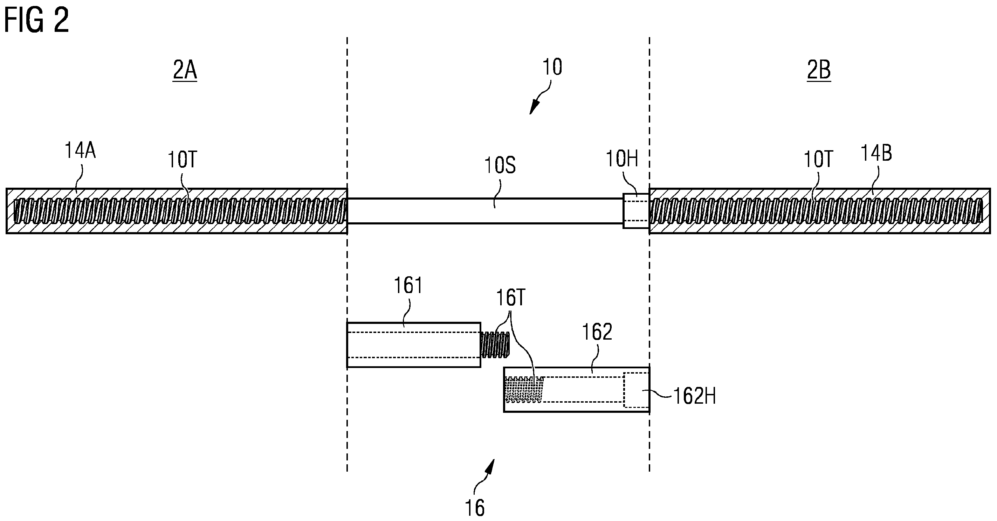

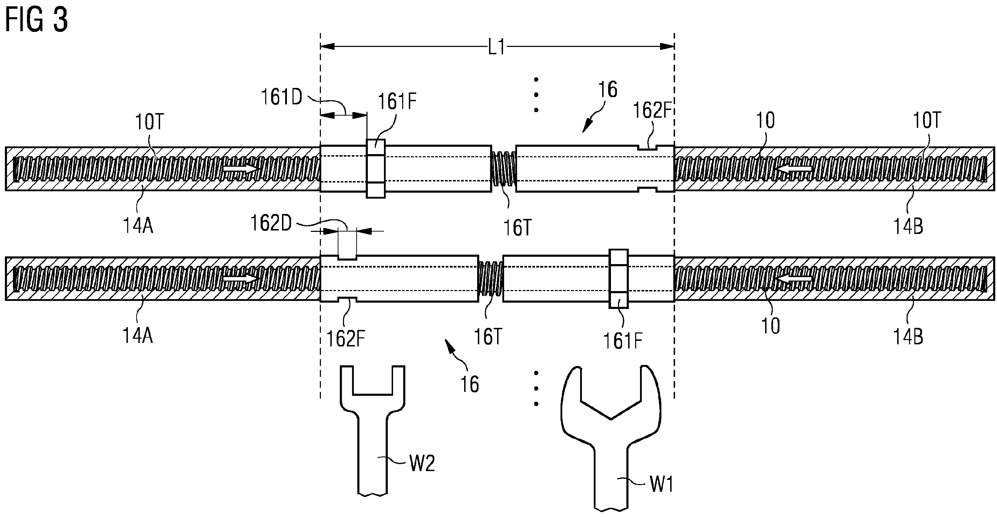

Figures 2 and 3 show components of an exemplary embodiment of the inventive connector assembly 1. Elements of the inventive connector assembly 1 are: a double-ended stud bolt 10, a first threaded insert 14A with an interior thread to match the thread at one end of the stud bolt 10; a second threaded insert 14B with an interior thread to match the thread at the other end of the stud bolt 10, and a length-adjustable spacer 16 which fits onto the stud bolt 10. For clarity, Figure 2 shows the two-part spacer 16 apart from the bolt 10, and indicates the opposite ends of the rotor blade sections 2A, 2B in which the threaded inserts 14A, 14B are embedded.

In this exemplary embodiment, the stud bolt 10 has an outer feature 10H shaped to engage with a complementary inner feature 162H of the spacer 16, indicated by ghost lines in the corresponding spacer section 162. Here, the spacer 16 comprises two cylindrical or tubular sections 161, 162, each provided with a straight thread to form a threaded joint 16T when one section 161, 162 is screwed onto the other section 161, 162. The thread lead can be formed to result in a desired length extension per turn, e.g. a length extension corresponding to the pitch of the stud bold threaded portion. Surface features 161F, 162F on the spacer 16 are provided to engage with corresponding tools as will be explained below. Figure 3 shows that the surface features 161F, 162F of a spacer 16 are offset by different lengths 161D, 162D from the respective spacer ends, allowing a favourably dense arrangement of connector assemblies.

By turning one part 161 of the spacer 16 relative to the other part 162, the length of the spacer 16 can be adjusted from an initial minimum length L0 as shown in Figure 3, to a final length L1 (the length of the intended gap between segments 2A, 2B) in which the annular outer ends of the spacer 16 press against the end faces of the rotor blade segments 2A, 2B as shown in Figure 3 (relevant parts of the rotor blade segments 2A, 2B are indicated by ghost lines). With the spacer 16 extended to press against the end faces of the rotor blade segments 2A, 2B, the resulting force against each end face is transferred to the threaded interfaces between the stud bolt 10 and its inserts 14A, 14B, effectively pre-tensioning the stud bolt 10 as indicated by the opposing axial arrows at the threaded ends 10T of the stud bolt 10. The force required to effect the extended spacer length L1 determines the magnitude of the pre-tension on the stud bolts 10, and preferably the spacers 16 are all extended using essentially the same force so that all stud bolts 10 are pre-tensioned to the same extent.

In an initial stage, one end of the stud bolt 10 of the connector assembly is screwed into the first insert 14A. This can be done by using a suitable tool to engage with the surface feature 10H on the shank 10S of the stud bolt 10 or, after placing the spacer 16 of that connector assembly over the stud bolt 10 so that its interior hex feature 162H fits about the surface feature 10H of the stud bolt 10, using a suitable tool to turn the spacer 16 together with the stud bolt 10.

The other end of the stud bolt 10 is then screwed into the second insert 14B, using a suitable tool to turn the spacer 16 together with the stud bolt 10. Turning the spacer 16 causes the bolt 10 to turn also, so that the second end of the stud bolt 10 engages with the threaded portion of the second insert 14B. As a result of this turning action, the first end of the stud bolt 10 is retracted some distance within the first insert 14A. The stud bolt 10 is now in position and connects the two parts 2A, 2B. A tool W1, W2 can be any suitable wrench, as indicated here, or any other type of tool that can engage with the relevant features of the stud bolt and spacer.

In a subsequent stage, the joint between rotor blade sections 2A, 2B is pre-tensioned. As illustrated in Figure 3, one part 162 of each spacer 16 is held stationary using a suitable tool, while the other part 161 is turned using another suitable tool. For example a spanner W2 may engage with opposing flat regions 162F on a second spacer section 162 to hold it in place, while an open-ended wrench W1 may engage with a hexagonal surface feature 161F on the first spacer part 161 to turn it relative to the second spacer section 162. In this way, the spacer sections 161, 162 are forced apart, extending the spacer 16 to its final length L1 and loading the opposing faces of the transition pieces 2A, 2B, thereby pre-tensioning the bolts 10 as indicated by the arrows.

As shown in the plan view given in Figure 3, the spacers 16 are preferably arranged in a staggered fashion. This permits an advantageously "dense" arrangement of spacers 16 without interference between a tool W1, W2 being used to tighten one spacer and the surface features 161F, 162F of an adjacent spacer.

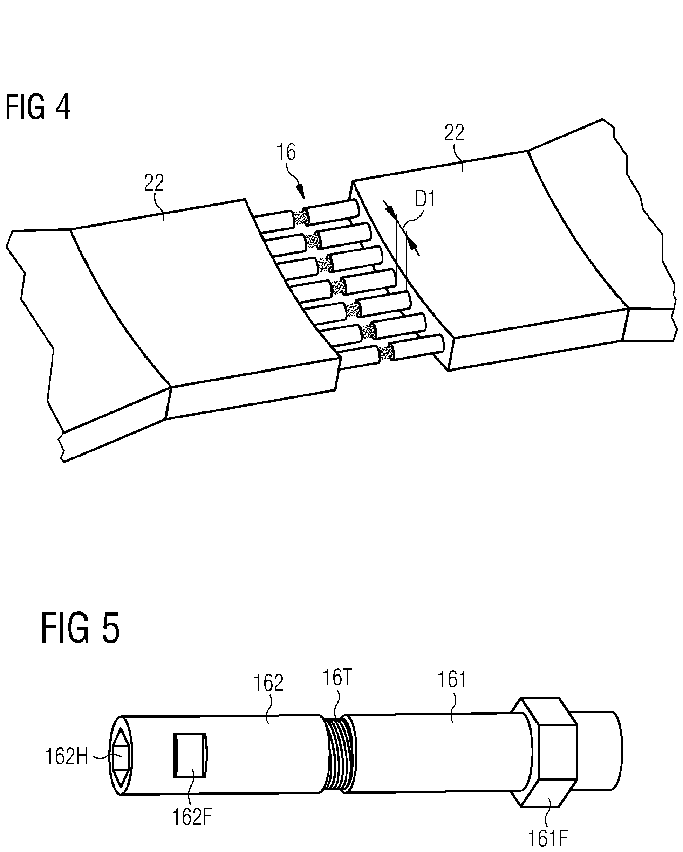

These steps are repeated until all the stud bolts 10 of all connector assemblies are in position, holding the two rotor blade segments 2A, 2B together as shown in the perspective view of Figure 4. The spacers 16 of the connector assemblies 1 are separated by a favourably small gap D1. This allows a larger number of spacers to be used (compared to prior art connectors joining the same transition pieces). Equally, the closer spacing allows narrower transition pieces 22 to be used.

Once all stud bolts 10 have been pre-tensioned as described above, the joint area between the rotor blade segments 2A, 2B can be closed in the usual manner, for example by arranging an airfoil-shaped fairing about the joint.

Figure 5 shows a view into the interior of the spacer 16 used in Figures 4 - 7 above. Here, section 162 has a hexagonal inner feature 162H that fits about the hexagonal outer feature 10H of the stud bolt 10. Of course, any suitable shapes could be chosen for these complementary features 162H, 10H.

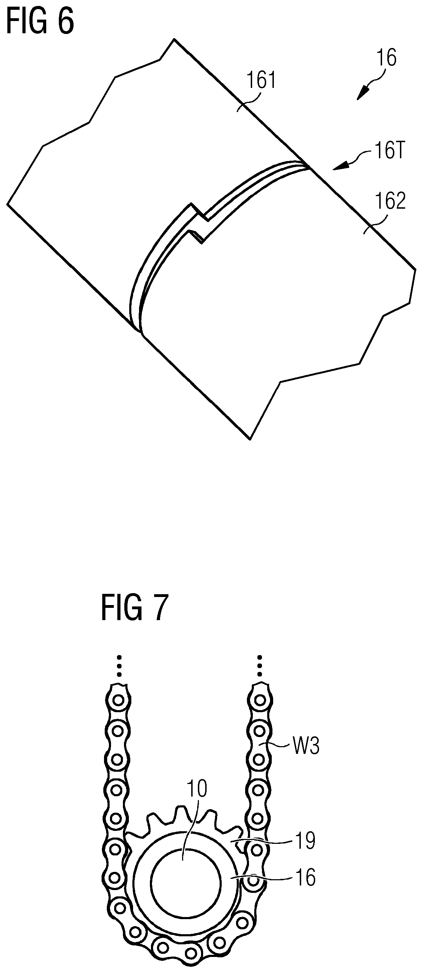

Figure 6 shows an alternative realization of the spacer 16. Here, instead of a threaded connection with multiple helical ridges, the complementary end faces of the spacer parts 161, 162 are shaped to form a "single screw thread" with corresponding inclined faces. As long as one spacer part is turned by no more than one complete rotation relative to the other spacer part, the parts remain in physical contact. In this way, an arrangement of such spacers can effectively load the opposing faces of the transition pieces as explained above.

Figure 7 shows a further realization of the spacer 16. Here, the parts of the spacer 16 are connected by a threaded interface as described above. In this exemplary embodiment, one section of the spacer is formed to include a cog or sprocket 16C about its outer circumference. During tightening of the connector assembly, a chain W3 of a tightening assembly (e.g. a tool with a motor-driven chainwheel) is placed about the sprocket 16C and actuated to turn that spacer section relative to the other. Of course, a belt drive arrangement could be used in lieu of the chain drive shown here.

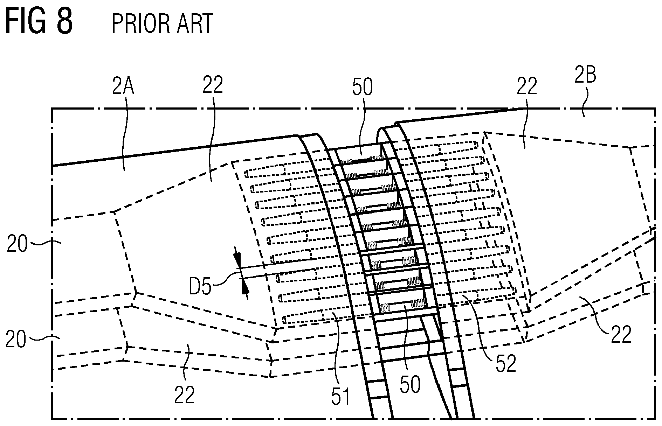

Figure 8 shows how the joint between segments 2A, 2B of a wind turbine rotor blade may be realized in a prior art approach. Here, a connector assembly 5 comprises a spacer 50 in the form of a hollow block or "bathtub", shaped to receive the outer ends of two stud bolts 51, 52. The other ends of the stud bolts are screwed into threaded inserts in the transition pieces of the rotor blade segments 2A, 2B. The spacer 50 must be large enough to allow a tool to be used for turning the stud bolts. This size requirement limits the number of connectors than can be deployed, and results in a relatively large separation D5 between adjacent connectors, so that the transition pieces 22 must be correspondingly wide.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements.

## Claims

1. A connector assembly (1) for connecting two parts (2A, 2B), comprising
- a stud bolt (10) comprising a shank (10S) and a threaded portion (10T) at each end of the shank (10S);
- a first threaded insert (14A, 14B) for embedding in a part (2A), adapted to engage with a first threaded portion (10T) of the stud bolt (10);
- a second threaded insert (14A, 14B) for embedding in the other part (2B), adapted to engage with the second threaded portion (10T) of the stud bolt (10); and
- a spacer (16) dimensioned to enclose the shank (10S) of the stud bolt (10), and comprising a length adjustment means (16T) for adjusting the length of the spacer (16) between an initial length (L0) and a maximum extended length (L1).

2. A connector assembly according to the preceding claim, wherein the spacer (16) comprises a number of surface features (161F, 162F, 16C) for engaging with a spacer length adjustment means (W1, W2).

3. A connector assembly according to any of the preceding claims, wherein a portion of the stud shank (10S) comprises a feature (10H) with a polygonal cross-sectional shape, and the spacer (16) comprises a complementary interior feature (162H) shaped to engage with the polygonal shank feature (10H).

4. A connector assembly according to any of the preceding claims, wherein the spacer (16) comprises a first tubular section (161) and a second tubular section (162), and wherein the length adjustment means comprises a threaded interface (16T) between the tubular sections (161, 162).

5. A connector assembly according to the preceding claim, wherein a first surface feature (161F) is formed about the first tubular section (161) and is shaped to engage with a tool (W1) for turning the first tubular section (161) relative to the second tubular section (162).

6. A connector assembly according to claim 4 or claim 5, wherein a second surface feature (162F) is formed about the second tubular section (162) and is shaped to engage with a tool (W2) that prevents rotation of second tubular section (162).

7. A connector assembly according to any of claims 4 to 6, wherein the surface features (161F, 162F) are offset by different lengths (161D, 162D) from the respective spacer ends.

8. A connector assembly according to any of the preceding claims, wherein the spacer (16) comprises sections (161, 162) of unequal length.

9. A wind turbine rotor blade comprising a first rotor blade segment (2A) and a second rotor blade segment (2B), and a plurality of connector assemblies (1) according to any of claims 1 to 8 arranged to connect the first rotor blade segment (2A) to the second rotor blade segment (2B).

10. A wind turbine rotor blade according to the preceding claim, comprising a staggered arrangement of spacers (16).

11. A wind turbine rotor blade according to claim 9 or claim 10, wherein, for each connector assembly (1),
- the first threaded insert (14A) is embedded in the first rotor blade segment (2A), and
- the second threaded insert (14B) is embedded in the second rotor blade segment (2B); and wherein
- the longitudinal axes of these threaded inserts (14A, 14B) are collinear.

12. A wind turbine rotor blade according to any of claims 9 to 11, wherein adjacent spacers (16) are separated by a gap of at most 10 mm.

13. A method of connecting a first wind turbine rotor blade segment (2A) to a second wind turbine rotor blade segment (2B) with a plurality of connector assemblies (1) according to any of claims 1 to 8, which method comprises the steps of
- embedding the first and second threaded inserts (14A, 14B) of each connector assembly (1) collinearly in the rotor blade segments (2A, 2B);
- placing a length-adjustable spacer (16) over the shank (10S) of each stud bolt (10);
- turning one end of each stud bolt (10) into a first threaded insert (14A) and turning the other end of that stud bolt (10) into the corresponding second threaded insert (14B); and
- extending the lengths of the spacers (16) as required to apply pre-tension to stud bolts (10).

14. A method according to claim 13, wherein the step of turning a stud bolt (10) into the second threaded insert (14B) is effected by rotation of the corresponding spacer (16).

15. A method according to claim 13 or 14, wherein the step of extending the length of a spacer (16) comprises the steps of deploying a first tool (W1) to effect rotation of the first spacer part (161) and deploying a second tool (W2) to prevent rotation of the second spacer part (162).

## Patentansprüche

1. Verbinderanordnung (1) zum Verbinden von zwei Teilen (2A, 2B), umfassend
- eine Stiftschraube (10), die einen Schaft (10S) und einen Gewindeabschnitt (10T) an jedem Ende des Schafts (10S) umfasst;
- einen ersten Gewindeeinsatz (14A, 14B) zum Einbetten in ein Teil (2A), der dazu ausgelegt ist, mit einem ersten Gewindeabschnitt (10T) der Stiftschraube (10) in Eingriff zu treten;
- einen zweiten Gewindeeinsatz (14A, 14B) zum Einbetten in den anderen Teil (2B), der dazu ausgelegt ist, mit dem zweiten Gewindeabschnitt (10T) der Stiftschraube (10) in Eingriff zu treten; und
- einen Abstandhalter (16), der so dimensioniert ist, dass er den Schaft (10S) der Stiftschraube (10) umschließt, und der ein Längeneinstellmittel (16T) zum Einstellen der Länge des Abstandhalters (16) zwischen einer anfänglichen Länge (L0) und einer maximalen verlängerten Länge (L1) umfasst.

2. Verbinderanordnung nach dem vorhergehenden Anspruch, wobei der Abstandhalter (16) eine Anzahl von Oberflächenmerkmalen (161F, 162F, 16C) zum Eingreifen in ein Abstandhalterlängeneinstellmittel (W1, W2) umfasst.

3. Verbinderanordnung nach einem der vorhergehenden Ansprüche, wobei ein Abschnitt des Schraubenschafts (10S) ein Merkmal (10H) mit einer polygonalen Querschnittsform umfasst und der Abstandhalter (16) ein komplementäres Innenmerkmal (162H) umfasst, das so geformt ist, dass es mit dem polygonalen Schaftmerkmal (10H) in Eingriff tritt.

4. Verbinderanordnung nach einem der vorhergehenden Ansprüche, wobei der Abstandhalter (16) einen ersten rohrförmigen Abschnitt (161) und einen zweiten rohrförmigen Abschnitt (162) umfasst und wobei das Längeneinstellmittel eine Gewindeschnittstelle (16T) zwischen den rohrförmigen Abschnitten (161, 162) umfasst.

5. Verbinderanordnung nach dem vorhergehenden Anspruch, wobei ein erstes Oberflächenmerkmal (161F) um den ersten rohrförmigen Abschnitt (161) gebildet ist und so geformt ist, dass es mit einem Werkzeug (W1) zum Drehen des ersten rohrförmigen Abschnitts (161) in Bezug auf den zweiten rohrförmigen Abschnitt (162) in Eingriff tritt.

6. Verbinderanordnung nach Anspruch 4 oder Anspruch 5, wobei ein zweites Oberflächenmerkmal (162F) um den zweiten rohrförmigen Abschnitt (162) gebildet ist und so geformt ist, dass es mit einem Werkzeug (W2) in Eingriff tritt, das eine Drehung des zweiten rohrförmigen Abschnitts (162) verhindert.

7. Verbinderanordnung nach einem der Ansprüche 4 bis 6, wobei die Oberflächenmerkmale (161F, 162F) um unterschiedliche Längen (161D, 162D) von den jeweiligen Abstandhalterenden versetzt sind.

8. Verbinderanordnung nach einem der vorhergehenden Ansprüche, wobei der Abstandhalter (16) Abschnitte (161, 162) ungleicher Länge umfasst.

9. Rotorschaufel einer Windkraftanlage, umfassend ein erstes Rotorschaufelsegment (2A) und ein zweites Rotorschaufelsegment (2B) und eine Vielzahl von Verbinderanordnungen (1) nach einem der Ansprüche 1 bis 8, die dazu zusammengestellt sind, das erste Rotorschaufelsegment (2A) mit dem zweiten Rotorschaufelsegment (2B) zu verbinden.

10. Rotorschaufel einer Windkraftanlage nach dem vorhergehenden Anspruch, umfassend eine gestaffelte Zusammenstellung von Abstandhaltern (16).

11. Rotorschaufel einer Windkraftanlage nach Anspruch 9 oder Anspruch 10, wobei für jede Verbinderanordnung (1)
- der erste Gewindeeinsatz (14A) in das erste Rotorschaufelsegment (2A) eingebettet ist und
- der zweite Gewindeeinsatz (14B) in das zweite Rotorschaufelsegment (2B) eingebettet ist; und wobei
- die Längsachsen dieser Gewindeeinsätze (14A, 14B) kollinear sind.

12. Rotorschaufel einer Windkraftanlage nach einem der Ansprüche 9 bis 11, wobei benachbarte Abstandhalter (16) durch einen Spalt von höchstens 10 mm getrennt sind.

13. Verfahren zum Verbinden eines ersten Rotorschaufelsegments (2A) einer Windkraftanlage mit einem zweiten Rotorschaufelsegment (2B) einer Windkraftanlage mit einer Vielzahl von Verbinderanordnungen (1) nach einem der Ansprüche 1 bis 8, wobei das Verfahren die folgenden Schritte umfasst:
- Einbetten des ersten und des zweiten Gewindeeinsatzes (14A, 14B) jeder Verbinderanordnung (1) kollinear in die Rotorschaufelsegmente (2A, 2B);
- Platzieren eines längeneinstellbaren Abstandhalters (16) über den Schaft (10S) jeder Stiftschraube (10);
- Drehen eines Endes jeder Stiftschraube (10) in einen ersten Gewindeeinsatz (14A) und Drehen des anderen Endes dieser Stiftschraube (10) in den entsprechenden zweiten Gewindeeinsatz (14B); und
- Verlängern der Längen der Abstandhalter (16) nach Bedarf, um eine Vorspannung auf Stiftschrauben (10) anzuwenden.

14. Verfahren nach Anspruch 13, wobei der Schritt des Drehens einer Stiftschraube (10) in den zweiten Gewindeeinsatz (14B) durch Drehung des entsprechenden Abstandhalters (16) bewirkt wird.

15. Verfahren nach Anspruch 13 oder 14, wobei der Schritt des Verlängerns der Länge eines Abstandhalters (16) die Schritte Einsetzen eines ersten Werkzeugs (W1) dazu, eine Drehung des ersten Abstandhalterteils (161) zu bewirken, und Einsetzen eines zweiten Werkzeugs (W2) dazu, eine Drehung des zweiten Abstandhalterteils (162) zu verhindern, umfasst.

## Revendications

1. Ensemble connecteur (1) pour connecter deux parties (2A, 2B), comprenant
- un goujon (10) comprenant une tige (10S) et une partie filetée (10T) au niveau de chaque extrémité de la tige (10S) ;
- un premier insert fileté (14A, 14B) pour encastrement dans une partie (2A), adapté pour venir en prise avec une première partie filetée (10T) du goujon (10) ;
- un second insert fileté (14A, 14B) pour encastrement dans l'autre partie (2B), adapté pour venir en prise avec la seconde partie filetée (10T) du goujon (10) ; et
- une entretoise (16) dimensionnée pour enfermer la tige (10S) du goujon (10), et comprenant un moyen d'ajustement de longueur (16T) pour ajuster la longueur de l'entretoise (16) entre une longueur initiale (L0) et une longueur étendue maximale (L1).

2. Ensemble connecteur selon la revendication précédente, dans lequel l'entretoise (16) comprend un certain nombre de caractéristiques de surface (161F, 162F, 16C) pour venir en prise avec un moyen d'ajustement de longueur d'entretoise (W1, W2).

3. Ensemble connecteur selon l'une quelconque des revendications précédentes, dans lequel une partie de la tige de goujon (10S) comprend une caractéristique (10H) avec une forme de section transversale polygonale, et l'entretoise (16) comprend une caractéristique intérieure complémentaire (162H) façonnée pour venir en prise avec la caractéristique de tige polygonale (10H).

4. Ensemble connecteur selon l'une quelconque des revendications précédentes, dans lequel l'entretoise (16) comprend une première section tubulaire (161) et une seconde section tubulaire (162), et dans lequel le moyen d'ajustement de longueur comprend une interface filetée (16T) entre les sections tubulaires (161, 162).

5. Ensemble connecteur selon la revendication précédente, dans lequel une première caractéristique de surface (161F) est formée autour de la première section tubulaire (161) et est façonnée pour venir en prise avec un outil (W1) pour la rotation de la première section tubulaire (161) par rapport à la seconde section tubulaire (162).

6. Ensemble connecteur selon la revendication 4 ou la revendication 5, dans lequel une seconde caractéristique de surface (162F) est formée autour de la seconde section tubulaire (162) et est façonnée pour venir en prise avec un outil (W2) qui empêche la rotation de la seconde section tubulaire (162).

7. Ensemble connecteur selon l'une quelconque des revendications 4 à 6, dans lequel les caractéristiques de surface (161F, 162F) sont décalées par des longueurs différentes (161D, 162D) à partir des extrémités d'entretoise respectives.

8. Ensemble connecteur selon l'une quelconque des revendications précédentes, dans lequel l'entretoise (16) comprend des sections (161, 162) de longueur inégale.

9. Pale de rotor d'éolienne comprenant un premier segment de pale de rotor (2A) et un second segment de pale de rotor (2B), et une pluralité d'ensembles connecteurs (1) selon l'une quelconque des revendications 1 à 8 agencés pour connecter le premier segment de pale de rotor (2A) au second segment de pale de rotor (2B).

10. Pale de rotor d'éolienne selon la revendication précédente, comprenant un agencement décalé d'entretoises (16).

11. Pale de rotor d'éolienne selon la revendication 9 ou la revendication 10, dans laquelle, pour chaque ensemble connecteur (1),
- le premier insert fileté (14A) est encastré dans le premier segment de pale de rotor (2A), et
- le second insert fileté (14B) est encastré dans le second segment de pale de rotor (2B) ; et dans laquelle
- les axes longitudinaux de ces inserts filetés (14A, 14B) sont colinéaires.

12. Pale de rotor d'éolienne selon l'une quelconque des revendications 9 à 11, dans laquelle des entretoises (16) adjacentes sont séparées par un espace d'au plus 10 mm.

13. Procédé pour connecter un premier segment de pale de rotor d'éolienne (2A) à un second segment de pale de rotor d'éolienne (2B) avec une pluralité d'ensembles connecteurs (1) selon l'une quelconque des revendications 1 à 8, lequel procédé comprend les étapes de :
- l'encastrement des premier et second inserts filetés (14A, 14B) de chaque ensemble connecteur (1) colinéairement dans les segments de pale de rotor (2A, 2B) ;
- le placement d'une entretoise (16) réglable en longueur pardessus la tige (10S) de chaque goujon (10) ;
- la rotation d'une extrémité de chaque goujon (10) dans un premier insert fileté (14A) et la rotation de l'autre extrémité de ce goujon (10) dans le second insert fileté (14B) correspondant ; et
- l'extension des longueurs des entretoises (16) tel que requis pour appliquer une précontrainte aux goujons (10).

14. Procédé selon la revendication 13, dans lequel l'étape de rotation d'un goujon (10) dans le second insert fileté (14B) est effectuée par la rotation de l'entretoise (16) correspondante.

15. Procédé selon la revendication 13 ou 14, dans lequel l'étape d'extension de la longueur d'une entretoise (16) comprend les étapes du déploiement d'un premier outil (W1) pour effectuer une rotation de la première partie d'entretoise (161) et du déploiement d'un second outil (W2) pour empêcher la rotation de la seconde partie d'entretoise (162).
